# EUROPÄISCHE PATENTSCHRIFT

(11) **EP 2 160 816 B1**
(45) Veröffentlichungstag und Bekanntmachung des Hinweises auf die Patenterteilung: **19.06.2013**
(21) Anmeldenummer: 08749800.2
(22) Anmeldetag: 28.04.2008
(51) Int. Cl.: H02K 1/27

(54) **SYNCHRONMOTOR MIT 12 STATORZÄHNEN UND 10 ROTORPOLEN**
SYNCHRONOUS MOTOR HAVING 12 STATOR TEETH AND 10 ROTOR POLES
MOTEUR SYNCHRONE À 12 DENTS STATORIQUES ET 10 PÔLES ROTORIQUES

(30) Priorität: 25.06.2007 DE 102007029157
(43) Veröffentlichungstag der Anmeldung: 10.03.2010
(73) Patentinhaber: Robert Bosch GmbH, 70442 Stuttgart (DE)
(72) Erfinder: ROTH, Karl-Juergen, 71701 Schwieberdingen (DE); REUTLINGER, Kurt, 70174 Stuttgart (DE)
(86) Internationale Anmeldenummer: PCT/EP2008/055178
(87) Internationale Veröffentlichungsnummer: WO 2009/000578

(56) Entgegenhaltungen:
- EP-A- 1 035 630
- EP-A- 1 164 684
- EP-A- 1 244 195
- EP-A- 1 657 800
- EP-A2- 1 602 554
- WO-A-83/00956
- WO-A-02/052693
- WO-A-2007/004009
- DE-A1- 19 851 883
- DE-U1- 20 303 580
- DE-U1-202004 016 534
- GB-A- 2 284 104
- JP-A- 59 021 266
- US-A- 5 508 576
- US-A- 5 679 995
- US-A- 6 133 663
- US-A1- 2002 130 578

## Beschreibung

### Technisches Gebiet

Die Erfindung betrifft einen Synchronmotor mit 12 Statorzähnen und 10 Rotorpolen, insbesondere für den Einsatz bei elektrischen Lenkhilfen.

### Stand der Technik

Bei elektrischen Antrieben für Lenksysteme mit elektromechanischer Unterstützung für den Einsatz in Kraftfahrzeugen ist es erforderlich, dass die Schwankungen des an der Welle erzeugten Antriebsmoments sehr gering ist. Üblicherweise werden als solche Antriebe permanenterregte elektronisch kommutierte Synchronmotoren verwendet, da diese aufgrund ihrer Leistungsdichte, ihrem Wirkungsgrad und ihrer Regelmöglichkeiten für diese Anwendungen bevorzugt sind. Bei elektronisch kommutierten Synchronmotoren entstehen jedoch durch Oberwellen so genannte Oberwellenmomente, die zu erheblichen Schwankungen des Drehmoments führen können. Deshalb müssen solche Antriebe derart gestaltet werden, dass diese Oberwellen möglichst reduziert oder in ihrer Auswirkung auf den Drehmomentenverlauf gering sind.

Weiterhin treten bei diesen Synchronmaschinen Drehmomentschwankungen nicht nur unter Last auf, sondern auch bei stromloser Statorwicklung, die als Rastmomente bezeichnet werden. Eine gängige Methode, Rastmomente in Synchronmotoren zu reduzieren, besteht darin, das Verhältnis einer Statornutzahl zur Polzahl so zu wählen, dass das kleinste gemeinsame Vielfache möglichst groß wird. Dies kann z.B. durch eine fein verteilte Wicklung erreicht werden (Beispiel mit q=2 bzw. 2 Nuten pro Pol und Phase). Aufgrund der beengten Platzverhältnisse bei kleinen Elektromotoren ist es jedoch häufig nicht möglich, eine fein verteilte Wicklung in den Anker einzulegen, um ein geeignetes Luftspaltfeld mit einem geringen Oberwellengehalt zu erzeugen. Daher muss insbesondere bei derartigen Synchronmotoren bei kleiner Bauform mit entsprechenden Oberwellen im Luftspalt gerechnet werden. Die Oberwellen sollten jedoch so sein, dass sie keine oder nur geringe Oberwellenmomente generieren. Daher wird bei kleinen Synchronmaschinen häufig auf Bruchlochwicklungen (Nutzahl pro Pol und Strang) übergegangen. Dies wird beispielsweise bei einem Synchronmotor mit 9 Statorzähnen im Stator und 8 Rotorpolen bzw. mit 18 Statorzähnen im Stator und 8 Rotorpolen erreicht.

Eine weitere wesentliche Anforderung besteht darin, einen Elektromotor zuverlässiger zu machen. Im Gegensatz zu elektrisch erregten Maschinen ist es bei Permanentmagneten nicht möglich, das magnetische Feld abzuschalten. Dies kann im Fehlerfall, wie z.B. Kurzschlüssen in der Wicklung, zu erheblichen Bremsmomenten führen, die beim Einsatz in einem Lenksystem zu einem Blockieren der Lenkung führen können. Daher ist es wünschenswert, Elektromotoren zur Verfügung zu stellen, die eine reduzierte Ausfallwahrscheinlichkeit besitzen und im Fehlerfall geringe Bremsmomente aufweisen.

EP 1 602 554 offenbart eine Synchronmaschine mit einem Rotor, der Sinuspole aufweist.

### Offenbarung der Erfindung

Es ist daher Aufgabe der vorliegenden Erfindung, einen Synchronmotor zur Verfügung zu stellen, der in einfacher Weise aufbaubar ist, geringe Rastmomente aufweist und eine geringe Momentenwelligkeit aufweist und darüber hinaus eine erhöhte Zuverlässigkeit aufgrund ihrer Aufbauweise besitzt.

Diese Aufgabe wird durch die Synchronmaschine nach Anspruch 1 gelöst.

Weitere vorteilhafte Ausgestaltungen der Erfindung sind in den abhängigen Ansprüchen angegeben.

Gemäß einem Aspekt ist eine elektrische Maschine, insbesondere eine Synchronmaschine, vorgesehen. Die elektrische Maschine umfasst eine Statoranordnung mit zwölf Statorzähnen sowie einen Rotor mit zehn Rotorpolen, wobei die Rotorpole durch Luftspalte getrennt und die Rotorpole als Sinuspole ausgebildet sind.

Die Ausbildung einer elektrischen Maschine mit zwölf Statorzähnen und zehn Rotorpolen in Kombination mit der Ausbildung der Rotorpole hat den Vorteil, dass das Rastmoment und die Oberwellenmomente deutlich gegenüber einer elektrischen Maschine ohne Sinuspole reduziert werden können.

Weiterhin können die tangentialen Luftspalte zwischen den Polen sich in radialer Richtung nach außen aufweiten.

Gemäß einer weiteren Ausführungsform ist jeder Rotorpol mit einem Permanentmagneten versehen, dessen Nordpol-Südpol-Richtung radial verläuft, wobei die Polung einander benachbarter Permanentmagnete entgegen gesetzt ist.

Weiterhin können die Rotorpole in einer Folgepolanordnung ausgebildet sein, wobei nur jeder zweite Rotorpol mit einem Permanentmagneten ausgebildet ist, dessen Nordpol-Südpol-Richtung radial verläuft, wobei die Polung der Permanentmagnete gleichgerichtet ist.

Gemäß einer weiteren Ausführungsform können innerhalb des Rotors aufgestellte Permanentmagnete, insbesondere in Taschen, vorgesehen sein, deren Nordpol-Südpol-Richtung in Umfangsrichtung verlaufen. Insbesondere können benachbarte aufgestellte Permanentmagnete eine zueinander entgegen gesetzte Polungsrichtung aufweisen.

Weiterhin kann zwischen jeweils zwei Rotorpole eine Tasche zur Aufnahme eines der Permanentmagneten vorgesehen sein, wobei nur jede zweite Tasche mit einem jeweiligen Permanentmagneten versehen ist.

Die Statorzähne können entsprechend einer Folgezahnanordnung bewickelt sein, wobei nur jeder zweite Statorzahn eine Statorspule trägt.

Weiterhin kann jeder Statorzahn mit einer Statorspule versehen sein, wobei die Statorspulen zu Gruppen mit jeweils zwei in Reihe geschaltete Statorspulen vorgesehen sind, wobei die Gruppen von Statorspulen in einer oder mehreren Sternschaltungen verschaltet sind. Insbesondere können die Gruppen von Statorspulen in einer zwei Sternschaltungen mit jeweils drei Gruppen von Statorspulen verschaltet sein, wobei die entsprechenden drei Gruppen von Statorspulen mit Anschlüssen für drei Phasenspannungen verbunden sind.

Alternativ kann jeder Statorzahn mit einer Statorspule versehen sein, wobei die Statorspulen zu Gruppen mit jeweils zwei in Reihe geschaltete Statorspulen vorgesehen sind, wobei die Gruppen von Statorspulen in einer oder mehreren Dreieckschaltungen verschaltet sind. Insbesondere können die Gruppen von Statorspulen in zwei Dreieckschaltungen mit jeweils drei Gruppen von Statorspulen verschaltet sein, wobei die entsprechenden drei Gruppen von Statorspulen jeweils einer der Dreiecksschaltungen mit Anschlüssen für drei Phasenspannungen verbunden sind.

### Kurze Beschreibung der Zeichnungen

Bevorzugte Ausführungsformen der vorliegenden Erfindung werden nachfolgend anhand der beigefügten Zeichnungen näher erläutert. Es zeigen:
- Fig. 1: eine Querschnittsdarstellung eines 12/10-Synchronmotors gemäß einem ersten Beispiel;
- Fig. 2: eine Querschnittsdarstellung eines Rotors eines 12/10-Synchronmotors gemäß einem weiteren Beispiel;
- Fig. 3: eine Querschnittsdarstellung eines Rotors eines 12/10-Synchronmotors gemäß einem weiteren Beispiel;
- Fig. 4: eine Querschnittsdarstellung eines Rotors eines 12/10-Synchronmotors gemäß einen weiteren Beispiel;
- Fig. 5: eine Querschnittsdarstellung eines Rotors eines 12/10-Synchronmotors gemäß, einer Ausführungsform der Erfindung;
- Fig. 6: eine Querschnittsdarstellung einer Statoranordnung gemäß einen weiteren Beispiel;
- Figuren 7 bis 12: zeigen verschiedene Möglichkeiten der Verschalung der Statorspulen des 12/10-Synchronmotors gemäß der obigen Ausführungsform.

### Beschreibung von Ausführungsformen

In den nachfolgenden Ausführungsformen entsprechen gleiche Bezugszeichen Elementen gleicher oder vergleichbarer Funktion.

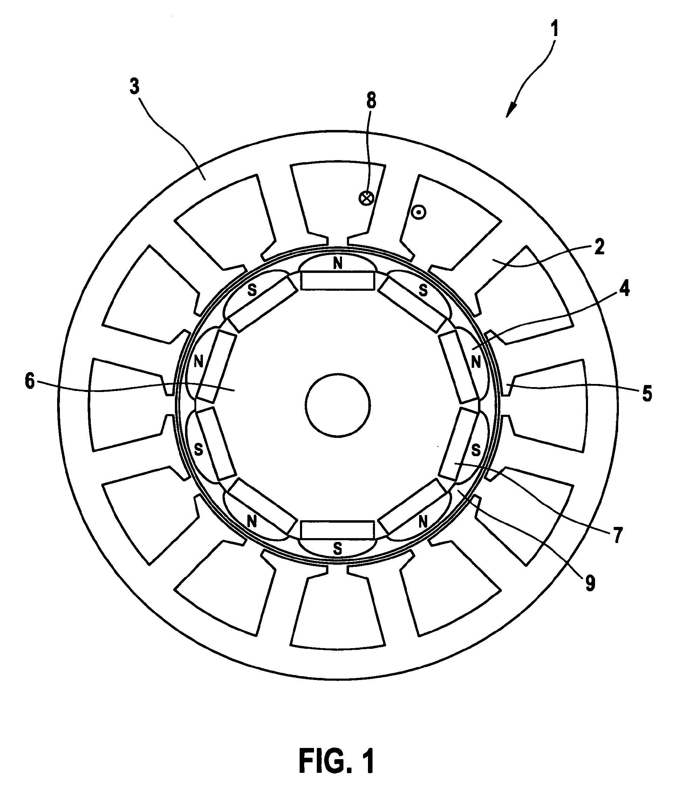

Fig. 1 zeigt einen Querschnitt durch einen Synchronmotor 1 gemäß einem Beispiel. Der Synchronmotor 1 ist mit 12 Statorzähnen 2 und 10 Rotorpolen 4 aufgebaut und wird nachfolgend als 12/10-Synchronmotor bezeichnet. Die Statorzähne 2 sind an einem Stator 3 angeordnet, sodass ihre jeweiligen Zahnköpfe 5 zu einem gemeinsamen Mittelpunkt weisen, wobei deren jeweilige Mittenachsen in radialer Richtung um einen vorzugsweise den ringförmigen Stator 2 umgebenden Mittelpunkt verlaufen. Weiterhin sind die Statorzähne 2 gleichmäßig, d.h. mit gleichem Abstand (Winkelversatz) voneinander im Inneren des Stators 3 angeordnet. Im Inneren des Stators 3 befindet sich weiterhin ein Rotor 6, dessen Drehachse vorzugsweise dem Mittelpunkt entspricht. Auf dem Rotor 6 sind 10 Polmagnete 7 (Permanentmagnete) gleichmäßig um den Umfang verteilt angeordnet, deren Polrichtungen im Wesentlichen in radialer Richtung des Rotors 6 verlaufen. Zueinander benachbarte Polmagnete 7 weisen bezüglich der radialen Richtung eine zueinander entgegen gesetzte Polung auf, wobei sich jeweils zwei gleichgerichtete Polmagnete bezüglich der Rotorachse gegenüberliegen.

Die Statorzähne 2 sind von Statorspulen 8 umgeben, die im gezeigten Ausführungsbeispiel jeweils einen Statorzahn 2 (im gezeigten Ausführungsbeispiel ist der Übersichtlichkeit halber nur eine Statorspule dargestellt) umschließen. Dies hat den Vorteil, dass im Gegensatz zu aus dem Stand der Technik bekannten Ausführungen bei Statorspulen 8, die zwei oder mehr Statorzähne 2 umschließen, über Kreuz laufende Wicklungsstränge vermieden werden können, wodurch die Wahrscheinlichkeit für Kurzschlüsse verringert und dadurch die Zuverlässigkeit erhöht werden kann. Der Übersichtlichkeit halber sind in Fig. 1 nur eine Statorspule 8 dargestellt.

Die Polmagnete 7 des Rotors 6 sind in den Rotor 6 eingebettet, d.h. als so genannte vergrabene Magnete ausgebildet. Eine im wesentlichen zylinderförmige Außenumfangsfläche des Rotors 6 ist mit Rotorpolen und mit Luftspalten 9 zwischen den Rotorpolen 4 versehen, die sich ausgehend von einem die Tiefe der Luftspalte begrenzender Steg in radialer Richtung nach außen hin aufweiten, um so genannte Sinuspole zu bilden. Sinuspole sind Magnetpole eines Elektromotors, bei der sich eine sinusförmige Luftspaltinduktion ergibt. Derartige Sinuspole sind beispielsweise bereits von Rudolf Richter in "Elektrische Maschinen", Bd. 1, S. 170 ff., Julius-Springer-Verlag 1924, beschrieben. Da die Kontur in der Pollücke, d.h. in dem Luftspalt zwischen zwei Polen, nicht der exakten Gleichung folgen kann, ist dieser Bereich zwischen den Permanentmagneten 6 entsprechend mechanischen Gesichtspunkten zu gestalten. Daher wird z.B. die durch den Sinuspolaufbau vorgegebene Kontur nur bis zu einer bestimmten Breite über den jeweiligen Rotorpol 4 fortgeführt. Der Spalt wird zwischen den Polen wird nur bis zu einer bestimmten Tiefe ausgeführt, da er in diesem Bereich keine große Wirkung auf das Luftspaltfeld besitzt. In diesem Bereich wird er nach mechanischen Gesichtspunkten gestaltet.

Die Luftspaltaufweitung führt bei vergrabenen Permanentmagneten dazu, dass in radialer Richtung außerhalb der Permanentmagnete über dessen Pol das Material des Rotors 6 stärker gekrümmt ist als die Umfangslinie des Außenradius des Rotors 6, sodass sich aufweitende Luftspalte zwischen den Polen 4 des Rotors 6 gebildet werden. Diese Kontur für den Luftspalt erzeugt ein durch das Polrad annähernd sinusförmiges Luftspaltfeld, wodurch eine deutliche Reduzierung der Rastmomente im Leerlauf und der Oberwellenmomente unter Last ermöglicht wird. Vorzugsweise wird eine Näherungsfunktion für die Kontur der Luftspaltaufweitung verwendet, die mit 1/cos (P·ϕ) angegeben werden kann. P entspricht der Polpaarzahl und ϕ dem räumlichen Winkel ausgehend von einer Mittellinie des Pols 4. (Eine genauere Darstellung dieser Näherungsgleichung ist in der Druckschrift DE 103 14 763 dargestellt)

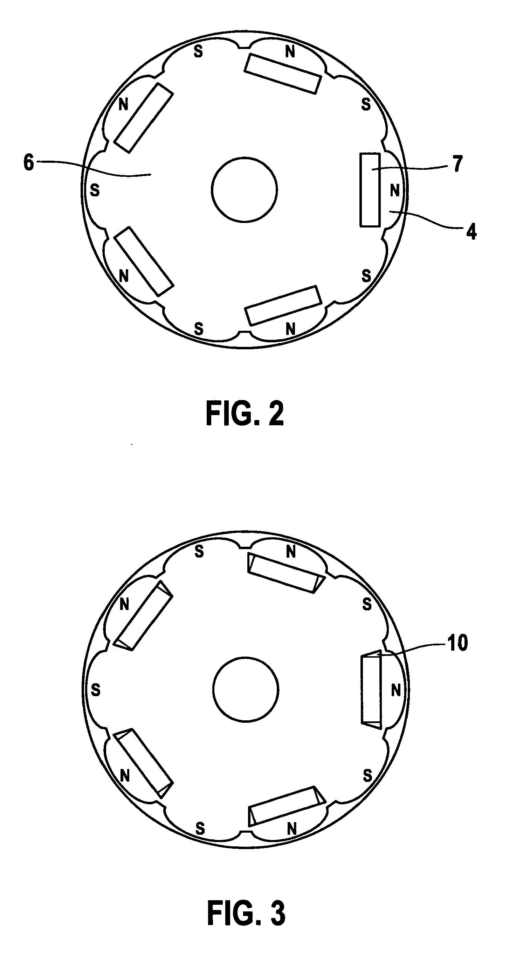

Fig. 2 zeigt eine Querschnittsdarstellung eines Rotors 6 für einen Synchronmotor gemäß einem weiteren Beispiel. Der Rotor 6 ist in einer Folgepolanordnung ausgebildet und weist nur fünf gleichgerichteten Permanentmagneten 7 auf, wobei nur jeder zweite Rotorpol 4 mit einem Permanentmagneten 7 versehen ist. Die Rotorpole 4, an denen keine Permanentmagnete 7 vorgesehen sind, bilden sich durch die benachbarten gleichgerichteten Permanentmagnete 7 aufgrund des magnetischen Rückschlusses durch das Material des Rotors 6 aus. Dies führt bei dem Synchronmotor der Fig. 2 zu einer Rotoranordnung mit fünf Hauptpolen und fünf Folgepolen. Eine derartige Folgepolanordnung kann in vorteilhafter Weise bei einem 12/10-Synchronmotor verwendet werden, da ein derartiger Synchronmotor keine subharmonischen Ständerwellen der Ordnung einhalb (1/2 = 0,5) (Wellenlänge = doppelte Rotorgrundwelle = vierfache Polteilung) oder deren ungeradzahligen Vielfachen erzeugen. Durch die Möglichkeit einer Folgepolanordnung lässt sich der Montageaufwand insbesondere bei baulich kleinen Motoren reduzieren und relativ teure Permanentmagnete einsparen.

Im Beispiel der Fig. 3 ist eine Querschnittsdarstellung eines Rotors für einen Synchronmotor gemäß einer weiteren Ausführungsform der Erfindung dargestellt. Dabei sind die Permanentmagnete 6 in Trapeztaschen 10 angeordnet, wodurch die Beeinflussung der Feldlinien der Hauptpole durch die Feldlinien der benachbarten Folgepole reduziert werden kann. Die Trapeztaschen 10 sind in radialer Richtung nach innen hin verjüngend ausgebildet. Der eingesetzte Permanentmagnet 7 ist z.B. quaderförmig oder brotlaibförmig ausgebildet, so dass zwischen der Wand einer jeweiligen Trapeztasche 10 und dem entsprechenden Permanentmagneten 7 ein Freiraum bildet, der dafür sorgt, dass der rücklaufende magnetische Fluss mit einem bestimmten Abstand an dem Permanentmagneten vorbeigeführt wird. Umgekehrt kann die Tasche sich nach innen hin auch aufweiten. Damit ist es möglich die Taschen weiter nach außen in den Pol zu rücken und den Magneten näher am Luftspalt zu platzieren.

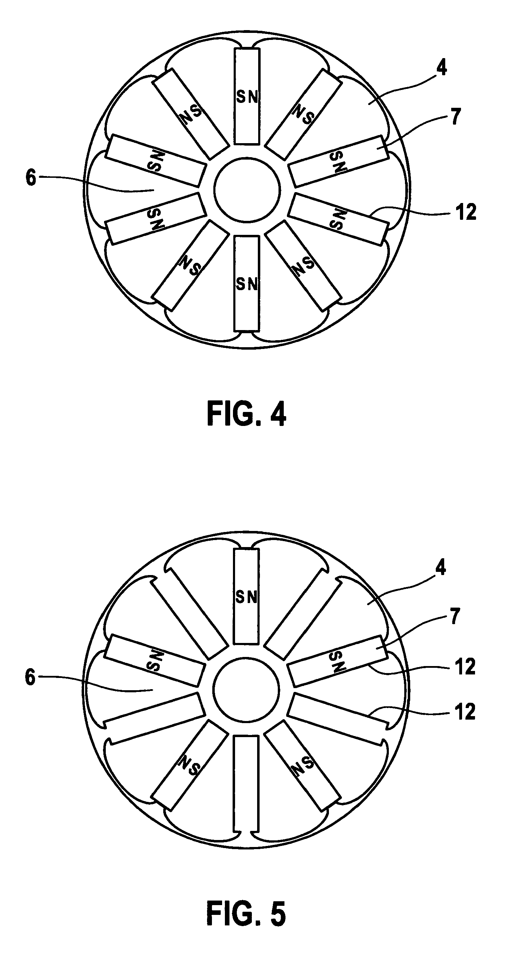

In Fig. 4 ist ein weiteres Beispiel einer Rotoranordnung mit aufgestellten Magneten dargestellt. Im Gegensatz dazu, die Permanentmagnete so anzuordnen, dass Nord- und Südpol eines Permanentmagneten 7 in radialer Richtung verlaufen, zeigt die Fig. 4 ein Beispiel, bei der die Permanentmagnete 7 als so genannte Speichenmagnete ausgebildet sind, deren Magnetpole in Umfangsrichtung angeordnet sind. Zueinander gerichtete Polmagnete entsprechen gleichartigen Polen. Die Permanentmagnete 7 sind in aufgestellten Taschen 12 angeordnet. Durch das zwischen den aufgestellten Permanentmagnete 7 angeordnete Rotormaterial werden die Feldlinien nach außen geführt, wobei durch die entsprechend einem Sinuspol geformte Außenfläche des Rotors 6 in einem Segment zwischen zwei benachbarten aufgestellten Permanentmagneten 7 ebenfalls zu einem sinusförmigen Luftspaltfeld führen mit dem oben beschriebenen Vorteil. Eine Anordnung der Permanentmagnete 7 als Speichenmagnete ermöglicht eine Steigerung der Drehmomentendichte und des Polflusses des Synchronmotors. Durch die Anordnung als Speichenmagnete 7 kann der magnetische Fluss von den Permanentmagneten 7 hin zum Rotorpol 4 des Rotors 6 konzentriert werden und es kann ein größerer Polfluss über dem Luftspalt erzeugt werden. Dadurch ist es möglich, bei gleicher Baugröße und Anzahl von Permanentmagneten 7 ein größeres Drehmoment zu erzeugen.

Fig. 5 zeigt eine Folgepolanordnung bei der Verwendung von Speichenmagneten 7, wobei nur in jeder zweiten Tasche 12 des Rotors 6 ein Speichenpermanentmagnet 7 angeordnet ist, während die dazwischen liegenden Taschen 12 leer verbleiben. Auch bei der Speichenanordnung der Permanentmagnete 7 ist eine Folgepolanordnung möglich, obwohl sich dabei keine Hauptpole und Folgepole ausbilden, sondern die Rotorpole 4 im Wesentlichen einen identischen Feldlinienverlauf bewirken. Um die mechanische Stabilität eines solchen Rotors 6 zu erhöhen, kann es sinnvoll sein, die nicht bestückten Taschen 12 mit magnetischem nicht aktivem Material zu füllen. Diese leeren Taschen 12 können weiterhin für weitere konstruktive Teile benutzt werden.

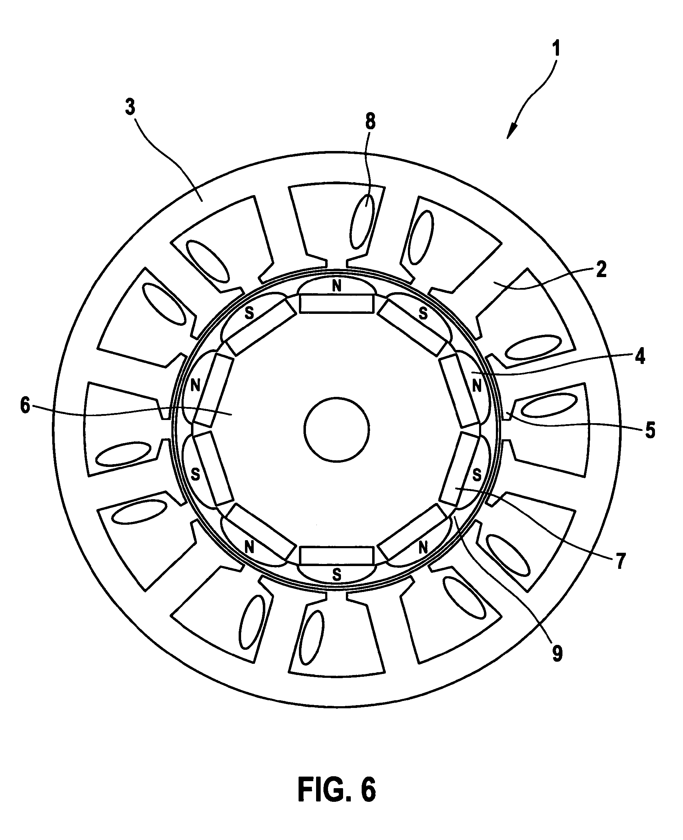

In Fig. 6 ist eine Statoranordnung eines Synchronmotors gezeigt, bei dem jeder zweite Statorzahn 2 nicht bewickelt wird, sodass lediglich sechs Statorspulen 8 vorgesehen sein müssen. Eine solche Anordnung nennt sich entsprechend der oben beschriebenen Folgepolanordnung Folgezahnanordnung, wobei die nicht bewickelten Statorzähne 2 durch den magnetischen Rückschluss einen funktionsfähigen Statorzahn 2 ausbilden. Eine derartige Statoranordnung ist mit jeder der zuvor beschriebenen Rotoranordnungen verwendbar.

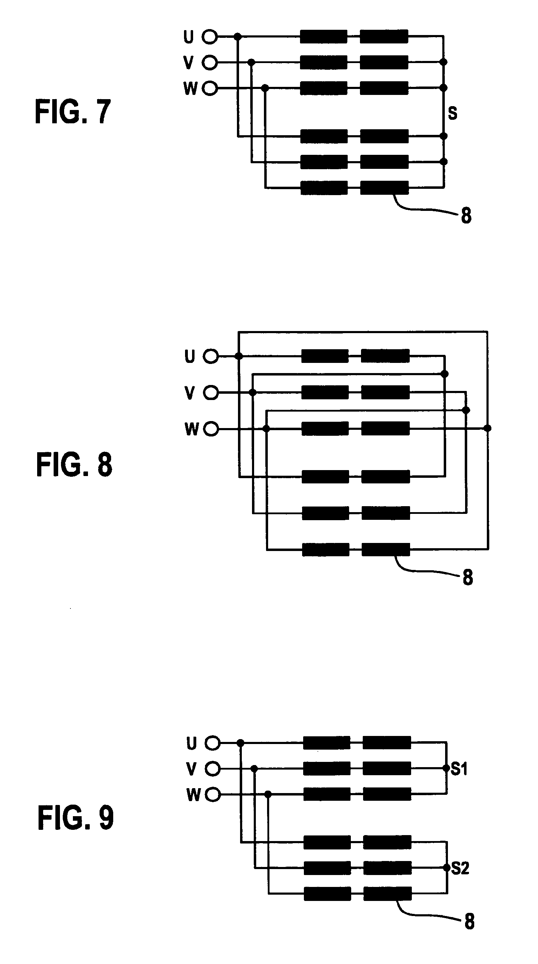

In den Figuren 7 bis 12 sind verschiedene Ausführungsformen der elektrischen Verschaltung der Statorspulen 8 der Ausführungsformen der Figuren 1 bis 5 dargestellt. Dabei sind jeweils zwei Statorspulen 8 zueinander in Reihe geschaltet, vorzugsweise zwei einander im Stator gegenüberliegende Statorspulen 8. Jeweils zwei miteinander in Reihe geschaltete Statorspulen 8 bewirken bei einer Ansteuerung bezüglich der radialen Richtung entgegen gesetzten magnetischem Fluss. D.h., ist die Flussrichtung einer der beiden Statorspulen 8 in Richtung des Rotors 6, so ist die Flussrichtung der entsprechend anderen Statorspule 8 dazu entgegengesetzt, d.h. vom Rotor 6 weg.

Die 12 Statorspulen bilden also 6 Gruppen von jeweils zwei in Reihe geschaltete im Stator einander diametral gegenüberliegenden Statorspulen 8, die über drei Phasen U, V, W elektrisch angesteuert werden. Jeweils zwei Gruppen von Statorspulen 8 werden dabei an eine Phase angeschlossen. Fig. 7 zeigt eine Verschaltung der Gruppen der Statorspulen 8 in Sternschaltung, d.h. jede der Gruppe von Statorspulen 8 ist mit einer der Phasen U, V, W mit einem Anschluss und mit einem weiteren Anschluss mit einem gemeinsamen Sternpunkt S verbunden.

In Fig. 8 ist eine Verschaltung in einer Dreiecksschaltung dargestellt, wobei jeweils zwei der Gruppen von Statorspulen 8 parallel zueinander geschaltet sind und die entsprechende Parallelschaltung mit ihren beiden Knoten mit einem Knoten einer weiteren der Parallelschaltungen verbunden sind, um eine Dreiecksschaltung zu bilden. Jeder Knoten ist mit einer der Phasen U, V, W verbunden.

Wie in Fig. 9 gezeigt, lassen sich die Gruppen von Statorspulen 8 auch in einer Sternschaltung mit getrennten Sternpunkten S1, S2 verschalten, wobei eine Gruppe jeweils drei Gruppen von Statorspulen 8 über die drei Phasen betrieben werden und einen gemeinsamen Sternpunkt aufweisen, sodass zwei Sternschaltungen, die parallel zueinander mit den Phasen U, V, W verbunden sind, nebeneinander existieren.

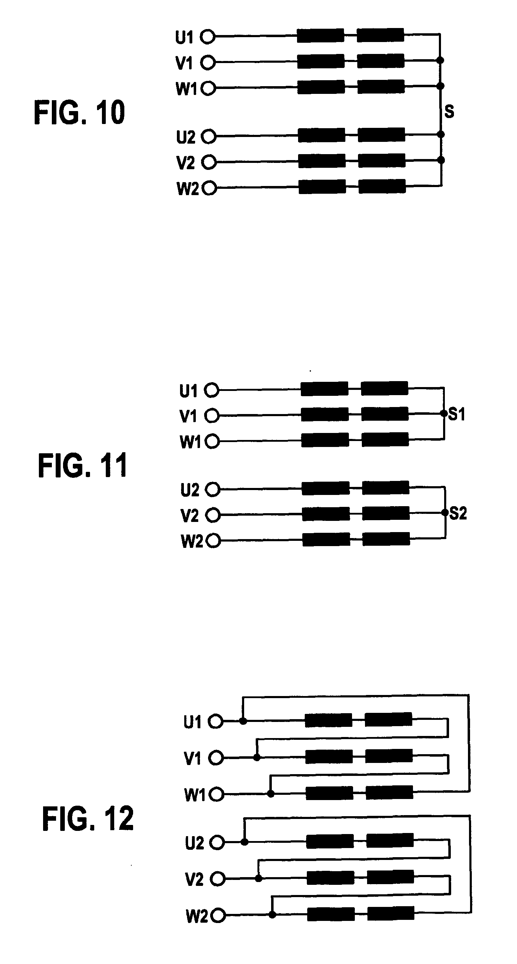

In Fig. 10 bis 12 sind Verschaltungen von Statorspulen 8 gezeigt, die jeweils mit zwei dreiphasigen Systemen betrieben werden.

Fig. 10 zeigt eine Verschaltung mit einem gemeinsamen Sternpunkt, wobei jeweils drei Gruppen von Statorspulen 8 mit getrennten dreiphasigen Ansteuerspannungen U1, V1, W1 bzw. U2, V2, W2 betrieben werden.

In Fig. 11 ist eine Ausführungsform gezeigt, bei der drei Gruppen von Statorspulen 8 vollständig unabhängig voneinander aufgebaut werden, d.h. drei Gruppen von Statorspulen 8 sind über einen gemeinsamen Sternpunkt S1 miteinander in einer Sternschaltung verbunden und werden von Phasenspannungen eines ersten dreiphasigen Systems und eine weitere Sternschaltung S mit drei Gruppen von Statorspulen 8 über Phasenspannungen eines weiteren Dreiphasen-Systems betrieben. Es ist vorteilhaft, ein solches System in einem symmetrischen Aufbau in dem Stator vorzusehen.

Analog zu der Ausführungsform der Fig. 11 zeigt die Ausführungsform der Fig. 12 eine Verschaltung in einer Dreiecksschaltung, wobei zwei unabhängig voneinander zu betreibende Dreiecksschaltungen mit jeweils drei Gruppen von zwei Statorspulen 8 nebeneinander möglichst symmetrisch an dem Stator vorgesehen werden. Das Auftrennen der Sternpunkte in zwei oder mehrere von einander getrennte Sternpunkte bzw. das Vorsehen von Statorspulenanordnungen mit getrennter Ansteuerung hat den Vorteil, dass bei einem Fehlerfall, d.h. bei Auftreten eines Kurzschlusses und dgl. das hervorgerufene Bremsmoment reduziert werden kann.

## Patentansprüche

1. Elektrische Maschine (1), insbesondere eine Synchronmaschine, umfassend:
eine Statoranordnung (3) mit zwölf Statorzähnen (2);
einen Rotor (6) mit zehn Rotorpolen (4);
wobei die Rotorpole (4) durch Luftspalte (9) getrennt und die Rotorpole (4) als Sinuspole ausgebildet sind,
wobei innerhalb des Rotors (6) aufgestellte Permanentmagnete (7) in Taschen vorgesehen sind, deren Nordpol-Südpol-Richtung in Umfangsrichtung verlaufen,
**dadurch gekennzeichnet, dass**
die Statorzähne (2) entsprechend einer Folgezahnanordnung bewickelt sind, wobei nur jeder zweite Statorzahn (2) eine Statorspule trägt, und
wobei zwischen zwei Rotorpolen (4) eine Tasche (12) zur Aufnahme eines Permanentmagneten (7) vorgesehen ist, wobei nur jede zweite Tasche (12) mit einem Permanentmagneten (7) versehen ist.

2. Elektrische Maschine nach Anspruch 1, wobei die tangentialen Luftspalte (9) sich in radialer Richtung nach außen aufweiten.

3. Elektrische Maschine nach 1 oder 2 wobei die durch die Rotorpole (4) und die Luftspalte (9) gebildete Polkontur für die Sinuspole gemäß einer Näherungsfunktion mit 1/cos (P·ϕ) ausgebildet ist.

4. Elektrische Maschine nach Anspruch 1, wobei die Gruppen von Statorspulen (8) in einer oder mehreren Sternschaltungen verschaltet sind.

5. Elektrische Maschine nach Anspruch 1, wobei die Gruppen von Statorspulen (8) in einer zwei Sternschaltungen mit jeweils drei Gruppen von Statorspulen (8) verschaltet sind, wobei die entsprechenden drei Gruppen von Statorspulen (8) mit Anschlüssen für drei Phasenspannungen verbunden sind.

6. Elektrische Maschine nach Anspruch 1, wobei die Gruppen von Statorspulen (8) in einer oder mehreren Dreieckschaltungen verschaltet sind.

7. Elektrische Maschine nach Anspruch 6, wobei die Gruppen von Statorspulen (8) in zwei Dreieckschaltungen mit jeweils drei Gruppen von Statorspulen (8) verschaltet sind, wobei die entsprechenden drei Gruppen von Statorspulen (8) jeweils einer der Dreiecksschaltungen mit Anschlüssen für drei Phasenspannungen verbunden sind.

## Claims

1. Electric machine (1), in particular a synchronous machine, comprising:
a stator arrangement (3) having twelve stator teeth (2);
a rotor (6) having ten rotor poles (4);
wherein the rotor poles (4) are separated by air gaps (9) and the rotor poles (4) are in the form of sinusoidal poles,
wherein permanent magnets (7) installed within the rotor (6) are provided in pockets, with the north pole-south pole direction of said permanent magnets running in the circumferential direction,
**characterized in that**
the stator teeth (2) are wound corresponding to a following-tooth arrangement, wherein only every second stator tooth (2) bears a stator coil, and wherein a pocket (12) for accommodating a permanent magnet (7) is provided between two rotor poles (4), wherein only every second pocket (12) is provided with a permanent magnet (7).

2. Electric machine according to Claim 1, wherein the tangential air gaps (9) widen outwards in the radial direction.

3. Electric machine according to Claim 1 or 2, wherein the pole contour formed by the rotor poles (4) and the air gaps (9) for the sinusoidal poles is formed in accordance with an approximation function where 1/cos (P·ϕ).

4. Electric machine according to Claim 1, wherein the groups of stator coils (8) are interconnected in one or more star-connected circuits.

5. Electric machine according to Claim 1, wherein the groups of stator coils (8) are interconnected in two star-connected circuits each having three groups of stator coils (8), wherein the corresponding three groups of stator coils (8) are connected to connections for three phase voltages.

6. Electric machine according to Claim 1, wherein the groups of stator coils (8) are interconnected in one or more delta-connected circuits.

7. Electric machine according to Claim 6, wherein the groups of stator coils (8) are interconnected in two delta-connected circuits each having three groups of stator coils (8), wherein the corresponding three groups of stator coils (8) of in each case one of the delta-connected circuits are connected to connections for three phase voltages.

## Revendications

1. Machine électrique (1), en particulier machine synchrone, comprenant :
un agencement statorique (3) avec douze dents de stator (2) ;
un rotor (6) avec dix pôles rotoriques (4) ;
les pôles rotoriques (4) étant séparés par des entrefers (9) et les pôles rotoriques (4) étant réalisés sous forme de pôles sinusoïdaux,
des aimants permanents (7) disposés à l'intérieur du rotor (6) étant prévus dans des cavités, dont l'orientation pôle-nord pôle-sud s'étend dans la direction périphérique,
**caractérisée en ce que**
les dents statoriques (2) sont enroulées suivant un agencement successif de dents, seulement une dent statorique (2) sur deux portant une bobine statorique, et
une cavité (12) pour recevoir un aimant permanent (7) étant prévue entre deux pôles rotoriques (4), seulement une cavité (12) sur deux étant pourvue d'un aimant permanent (7).

2. Machine électrique selon la revendication 1, dans laquelle les entrefers tangentiels (9) s'élargissent vers l'extérieur dans la direction radiale.

3. Machine électrique selon la revendication 1 ou 2, dans laquelle le contour des pôles formé par les pôles rotoriques (4) et les entrefers (9) est réalisé pour les pôles sinusoïdaux selon une fonction d'approximation avec 1/cos(P·ϕ).

4. Machine électrique selon la revendication 1, dans laquelle les groupes de bobines statoriques (8) sont montés dans un ou plusieurs branchements stellaires.

5. Machine électrique selon la revendication 1, dans laquelle les groupes de bobines statoriques (8) sont branchés dans deux branchements stellaires avec à chaque fois trois groupes de bobines statoriques (8), les trois groupes de bobines statoriques (8) correspondants étant connectés à des raccords pour trois tensions de phase.

6. Machine électrique selon la revendication 1, dans laquelle les groupes de bobines statoriques (8) sont branchés dans un ou plusieurs branchements triangulaires.

7. Machine électrique selon la revendication 6, dans laquelle les groupes de bobines statoriques (8) sont branchés dans 2 branchements triangulaires avec à chaque fois 3 groupes de bobines statoriques (8), les 3 groupes de bobines statoriques (8) correspondants de l'un des branchements triangulaires étant à chaque fois connectés à des raccords pour 3 tensions de phase.
